# EUROPÄISCHE PATENTSCHRIFT

(11) **EP 0 453 611 B1**
(45) Veröffentlichungstag und Bekanntmachung des Hinweises auf die Patenterteilung: **08.03.1995**
(21) Anmeldenummer: 90108096.0
(22) Anmeldetag: 27.04.1990
(51) Int. Cl.: B60R 13/02, B60R 7/04, B60H 1/24

(54) **Fertighimmel für Kraftfahrzeuge**
Roof liner for motor vehicles
Pavillon autoportant pour véhicules automobiles

(43) Veröffentlichungstag der Anmeldung: 30.10.1991
(60) Teilanmeldung: 93107573.3
(73) Patentinhaber: EMPE-WERKE ERNST PELZ GmbH & CO. KG, 82538 Geretsried (DE)
(72) Erfinder: Pelz, Peter, D-8192 Geretsried 2 (DE)
(74) Vertreter: Goddar, Heinz J., Dr.

(56) Entgegenhaltungen:
- EP-A- 0 123 004
- EP-A- 0 346 154
- EP-A- 0 347 149
- EP-A- 0 364 102
- AU-B- 503 534
- DE-A- 3 128 038
- DE-A- 3 530 533
- DE-A- 3 706 403
- DE-A- 3 721 377
- DE-U- 1 933 971
- GB-A- 1 576 546
- GB-A- 2 121 365
- US-A- 1 819 516
- US-A- 4 129 672
- US-A- 4 867 498

## Beschreibung

Die Erfindung betrifft einen Fertighimmel gemäß dem Oberbegriff des Anspruches 1.

Der sogenannte Fertighimmel, wie er heute arbeitssparend als selbständiges formsteifes Bauteil im Kraftfahrzeugbau eingesetzt wird, bietet viele,bisher nicht erkannte zusätzliche Nutzungsmöglichkeiten, die der früher zeitaufwendig eingesetzten Stoffbahn, welche nur die Aufgabe hatte, das Kraftfahrzeuginnere nach oben hin abzuschließen, verschlossen blieb. Dabei besteht ein solcher Fertighimmel im wesentlichen aus denselben Werkstoffen wie die anderen Innenverkleidungsteile und wird auch nach den gleichen, bekannten Fertigungsverfahren hergestellt.

Aus der DE-U 19 33 971 ist ein Fertighimmel bekannt, bei dem in einem Luftkanal, also auf der dem Fahrzeuginneren abgewandten Seite, Kabel aufgenommen sind. Diese Kabel dienender Verbindung von elektrischen Verbrauchern mit Schaltern bzw. einer Spannungsquelle und müssen entsprechend bemessen und zu den erforderlichen Anschlußpunkten gelegt werden. Eine nachträgliche Montage zusätzlicher elektrisch betriebener Geräte ist damit nur mit großem Aufwand möglich, da ein zusätzliches Kabel durch den Luftkanal gezogen werden muß.

Aus der GB-A 1,576 546 ist es bekannt, einen Fertighimmel mit Mulden zu versehen, in die elektrische Leitungen gelegt werden können, welche zum Anschluß von elektrischen Geräten dienen. Ein einfaches Montieren bzw. Demontieren von Leitungen und angeschlossenen Geräten ist jedoch auch mit diesem Aufbau nicht möglich.

Der Erfindung liegt die Aufgabe zugrunde, einen Fertighimmel für Kraftfahrzeuge derart auszugestalten, daß die Montage bzw. Demontage von elektrischen Verbrauchern oder deren nachträgliche Änderungen auf möglichst einfache Weise vorgenommen werden können.

Erfindungsgemäß wird diese Aufgabe dadurch gelöst, daß die bei dem gattungsgemäßen Fertighimmel integrierten und/oder auf seiner dem Fahrzeuginneren abgewandten Seite angeordneten Leitungen für die Zufuhr elektrischer Energie als die gesamte Fläche des Fertighimmels belegende Leiterschichten oder Leiternetze ausgebildet sind. Durch die erfindungsgemäße Ausgestaltung des Fertighimmels wird weitgehend flächendeckend ein stromführendes Netz zur Verfügung gestellt, das an allen Stellen anzapfbar ist.

In einer besonderen Ausführungsform der Erfindung wird vorgeschlagen, daß zwei Leiterschichten oder -netze vorgesehen sind, die durch eine elektrisch isolierende Schicht voneinander getrennt und mit Spannung bzw. Masse beaufschlagt sind. Auf diese Weise dienen die beiden durch eine Isolationsschicht getrennten Leiterschichten oder -netze als die beiden für eine Stromentnahme notwendigen Pole.

Die Erfindung schlägt weiterhin vor, Stromentnahmestellen vorzusehen, die vom Fahrzeuginneren aus leicht zugänglich sind. Zu diesem Zweck ist es ausreichend, an den für eine Stromentnahme vorgesehenen Stellen Bohrungen im Fertighimmel anzubringen, wodurch dann die in ihm verlegten Leiterelemente bzw. die beiden für eine Stromentnahme notwendigen Pole direkt zugänglich werden. Derartige Stromentnahmestellen können ggf. später problemlos wieder verschlossen und/oder an andere Stellen im Fertighimmel verlegt werden.

Besonders vorteilhaft ist es dabei, daß die Stromentnahmestellen aus Steck- oder anderen leicht löslichen Verbindungen bestehen. Diese sind leicht und problemlos zu installieren oder ggf. wieder zu entfernen.

Die Erfindung schlägt weiterhin vor, an die Stromentnahmestellen zusätzliche Vorrichtungen zur Wärme- und/oder Kälteerzeugung anzuschließen. Hierbei kann es sich beispielsweise um elektrische Wärmestrahler oder Ventilatoren handeln, um das Fahrzeuginnere ggf. zusätzlich zu bereits bestehenden Vorrichtungen zu klimatisieren.

Im Rahmen der vorliegenden Erfindung ist es besonders vorteilhaft, wenn der Fertighimmel für die Beleuchtung des Fahrzeuginneren Glühlampen, Leuchtstoffröhren und/oder, zumindest segmentweise, Leuchtstoffolien aufweist. Diese können durch die flächendeckende Stromversorgung im Fertighimmel an beliebigen Stellen problemlos installiert werden. Insbesondere die Anbringung von Leuchtstoffolien führt zu völlig neuen Einsatzzwecken von Beleuchtungselementen im Fahrzeuginneren. So können beispielsweise bestimmte funktionelle Bereiche, wie sie im weiteren noch beschrieben werden, mit den entsprechenden Folien gekennzeichnet werden. Auch die großflächige Anbringung vom nach Anlegen elektrischer Energie fluoreszierenden Folien kann insbesondere unter ästhetischen Aspekten sinnvoll sein.

Erfindungsgemäß wird auch vorgeschlagen, daß der Fertighimmel Anschlußstellen für eine Ton- und/oder Bildübertragung aufweist. Hierbei kann es sich um Anschlußstellen für Kopfhörer, Lautsprecher, Bildschirme, Anschlußstellen, durch die das Mithören von über Autotelefon empfangenen Gesprächen ermöglicht wird, oder dergleichen handeln. Prinzipiell werden hier alle Möglichkeiten eröffnet, die auf der Übertragung von elektrischer Energie beruhen.

Weiterhin wird erfindungsgemäß vorgeschlagen, daß die im Fertighimmel verlegten Leiterschichten oder -netze als Antenne für ein Autoradio, -fernsehen, -telefon oder dergleichen dienen. Durch den flächenartigen Charakter einer derartigen Antenne kann eine gegenüber den herkömmlichen Stabantenne bedeutend verbesserte Empfangsqualität erreicht werden.

Schließlich schlägt die Erfindung vor, daß der Fertighimmel mindestens eine Vorrichtung zum Aussenden von ultravioletter Strahlung in einer für eine handelsübliche Höhensonne zugelassenen Intensität aufweist. Die erfindungsgemäß vorgesehenen Leiterschichten oder -netze erlauben so, auch nachträglich,die problemlose Installation einer Art von Sonnenstudio im Fahrzeuginnern, was insbesondere auch unter dem Aspekt interessant ist, daß man heutzutage oft einen bedeutenden Teil seiner Freizeit im Auto verbringen muß.

## Patentansprüche

1. Fertighimmel für Kraftfahrzeuge, mit in diesen integrierten und/oder auf seiner dem Fahrzeuginneren abgewandten Seite angeordneten Leitungen für die Zufuhr elektrischer Energie, dadurch **gekennzeichnet**, daß die Leitungen als die gesamte Fläche des Fertighimmels belegende Leiterschichten oder Leiternetze ausgebildet sind.

2. Fertighimmel nach Anspruch 1, dadurch **gekennzeichnet**, daß wenigstens zwei Leiterschichten oder Leiternetze vorgesehen sind, die durch je eine elektrisch isolierende Schicht voneinander getrennt und mit Spannung bzw. Masse beaufschlagt sind.

3. Fertighimmel nach Anspruch 1 oder 2, dadurch **gekennzeichnet**, daß Stromentnahmestellen vorgesehen sind, die vom Fahrzeuginneren leicht zugänglich sind.

4. Fertighimmel nach Anspruch 3, dadurch **gekennzeichnet**, daß die Stromentnahmestellen aus Steck- oder anderen leicht lösbaren Verbindungen bestehen.

5. Fertighimmel nach Anspruch 3 oder 4, dadurch **gekennzeichnet**, daß an die Stromentnahmestellen zusätzliche Vorrichtungen zur Wärme- und/oder Kälteerzeugung, insbesondere zur Klimatisierung, angeschlossen sind.

6. Fertighimmel nach einem der vorhergehenden Ansprüche, dadurch **gekennzeichnet**, daß er für die Beleuchtung des Fahrzeuginneren Glühlampen, Leuchtstoffröhren und/oder, zumindest segmentweise Leuchtstoffolien aufweist.

7. Fertighimmel nach einem der vorangehenden Ansprüche, dadurch **gekennzeichnet**, daß er Anschlußstellen für eine Ton- und/oder Bildübertragung aufweist.

8. Fertighimmel nach Anspruch 7, dadurch **gekennzeichnet**, daß er mindestens einen eingebauten Lautsprecher aufweist.

9. Fertighimmel nach Anspruch 7 oder 8, dadurch **gekennzeichnet**, daß er mindestens einen Bildschirm aufweist.

10. Fertighimmel nach Anspruch 7, dadurch **gekennzeichnet,** daß er mindestens eine Anschlußstelle aufweist, durch die das Mithören von über Autotelefon empfangenen Gesprächen ermöglicht wird.

11. Fertighimmel nach Anspruch 1, dadurch **gekennzeichnet**, daß die Leiterschichten oder -netze als Antenne für ein Autoradio, -fernsehen, -telefon dienen.

12. Fertighimmel nach einem der vorangehenden Ansprüche, dadurch **gekennzeichnet**, daß er mindestens eine Vorrichtung zum Aussenden von ultravioletter Strahlung in einer für eine handelsübliche Höhensonne zugelassenen Intensität aufweist.

## Claims

1. A roof liner for motor vehicles comprising electric power supply lines incorporated in it and/or disposed on the side of the lining remote from the vehicle interior, characterised in that the lines are in the form of conductor layers or conductor networks covering the entire surface of the roof liner.

2. A roof liner according to claim 1, characterised in that at least two conductor layers or conductor networks are provided and are separated from one another by an electrically insulating layer and are connected to a voltage supply or to earth.

3. A roof liner according to claim 1 or 2, characterised in that power points are provided and are easily accessible from the vehicle interior.

4. A roof liner according to claim 3, characterised in that the power points comprise plug-in or other easily releasable connections.

5. A roof liner according to claim 3 or 4, characterised in that additional devices for generating heat and/or cold, particularly for air conditioning, are connected to the power points.

6. A roof liner according to any of the preceding claims, characterised in that it comprises incandescent lamps, fluorescent tubes and/or fluorescent sheets, at least over parts of the area, for lighting the interior of the vehicle.

7. A roof liner according to any of the preceding claims, characterized in that it comprises connections for sound and/or picture transmission.

8. A roof liner according to claim 7, characterised in that it comprises at least one built-in loudspeaker.

9. A roof liner according to claim 7 or 8, characterised in that it comprises at least one video screen.

10. A roof liner according to claim 7, characterised in that it comprises at least one connection for listening in to conversations received by car telephone.

11. A roof liner according to claim 1, characterised in that the conductor layers or networks serve as antennas for a car radio, television or telephone.

12. A roof liner according to any of the preceding claims, characterised in that it comprises at least one device for transmitting ultraviolet radiation at an intensity permitted for a commercial sun lamp.

## Revendications

1. Pavillon autoportant pour véhicules automobiles, comprenant des lignes d'alimentation en énergie électrique qui y sont intégrées et/ou qui sont disposées sur son côté opposé à l'habitacle du véhicule, caractérisé en ce que les lignes sont conçues sous la forme de couches conductrices ou de réseaux conducteurs qui couvrent toute la surface du pavillon autoportant.

2. Pavillon autoportant selon la revendication 1, caractérisé en ce qu'il est prévu au moins deux couches ou réseaux conducteurs qui sont séparés les uns des autres par une couche d'isolation électrique et qui sont reliés à une tension ou à la terre.

3. Pavillon autoportant selon la revendication 1 ou 2, caractérisé en ce qu'il est prévu des points de prélèvement du courant qui sont facilement accessibles depuis l'habitacle du véhicule.

4. Pavillon autoportant selon la revendication 3, caractérisé en ce que les points de prélèvement du courant sont constitués de connexions enfichables ou d'autres connexions faciles à débrancher.

5. Pavillon autoportant selon la revendication 3 ou 4, caractérisé en ce que des dispositifs supplémentaires de production de chaleur et/ou de froid, destinés en particulier à la climatisation, sont branchés sur les points de prélèvement du courant.

6. Pavillon autoportant selon l'une des revendications précédentes, caractérisé en ce que, pour éclairer l'habitacle du véhicule, le pavillon autoportant comporte des lampes à incandescence, des tubes fluorescents et/ou, au moins par segments, des films luminescents.

7. Pavillon autoportant selon l'une des revendications précédentes, caractérisé en ce qu'il comporte des points de branchement pour la transmission de son et/ou d'images.

8. Pavillon autoportant selon la revendication 7, caractérisé en ce qu'il comprend au moins un haut-parleur encastré.

9. Pavillon autoportant selon la revendication 7 ou 8, caractérisé en ce qu'il comprend au moins un écran.

10. Pavillon autoportant selon la revendication 7, caractérisé en ce qu'il comporte au moins un point de branchement permettant l'écoute conjointe de conversations reçues par le téléphone de voiture.

11. Pavillon autoportant selon la revendication 1, caractérisé en ce que les couches ou réseaux conducteurs servent d'antenne pour une radio, un téléviseur et un téléphone de bord.

12. Pavillon autoportant selon l'une des revendications précédentes, caractérisé en ce qu'il comprend au moins un dispositif pour émettre un rayonnement ultraviolet à l'intensité autorisée pour une lampe à ultraviolets de commercialisation courante.
